# EUROPEAN PATENT APPLICATION

(11) **EP 1 538 187 A1**
(43) Date of publication of application: **08.06.2005**
(21) Application number: 04425903.4
(22) Date of filing: 30.11.2004
(51) Int. Cl.: C09D 7/00

(54) **Paints with controlled opaqueness**

(30) Priority: 03.12.2003 IT PD20030296
(71) Applicant: Maritan, Bellino, 30036 Santa Maria di Sala (Venezia) (IT); Rossato, Laura, 30036 Santa Maria di Sala (Venezia) (IT)
(72) Inventor: Maritan, Bellino, 30036 Santa Maria Di Sala (Venezia) (IT)
(74) Representative: Vinci, Marcello

(57) **Abstract**

It's a particular assembly of colouring pigments, a new set, a new palette able to improve colour-material performance and exploit its potential to the full. The new line of paints comprises at least two opaqueness/transparency categories obtained by the amalgam of precise percentages of pigments in bands I, II or III. The percentages of pigments in CAT 1 are the following: about 40% of pigment from band I and about 60% of other pigment similar in shade but form band II, and the white is also made of about 40% covering white from band I and about 60% of white from band II. The percentages of pigments in CAT " are the following: about 28% of pigment from band II and 72% of other pigment similar in shade but from band III, associated with a white from band I.

## Description

This patent regards paints, in particular, but not only, for painters and artists, and it concerns a new assembly of colouring pigments, a new set, a new palette able to improve colour-material performance and exploit its potential to the full.

For a better understanding of the description that follows, and as a reference point, it must be remembered that colours are divided into primary (in simple terms: yellow, magenta, cyan); secondary, obtained by putting together two of the primary colours (orange, purple, green); and intermediate, which are the six colours needed to complete the chromatic circle.

At present on the market there are many different pigments and mixtures made from them, ground finely or extra finely.

To avoid confusion, the exact pigment or particular mixture of pigments of a commercial paint must be indicated by a letter-number code, in accordance with the Colour Index, compiled and constantly updated by the Society of Dyers and Colourists.

As a result of industrial treatment carried out, the same pigment can be found on the market with varying tonalities and levels of opaqueness.

It is well-known that what is defined as the body of a paint is the materiality which is noted by both the painter's eye and hand while he is spreading the paint; with regard to this it can be stated that transparent and semi-transparent colours lack body.

The painter uses body to obtain and/or respect the tone of all the things he wants to represent in any light condition in which these things may be immersed.

Transparent and semi-transparent pigments are therefore expressions of pure colouring power, unrestricted by body.

Semi-covering or semi-opaque pigments are carriers of semi-covering body and colouring power linked to this type of body.

Covering or opaque pigments are carriers of covering body and colouring power linked to this type of body.

With reference to the opaqueness of colours or colouring pigments, the common commercial sub-division , indicated by the well-known tiny squares that are coloured, half coloured or white respectively, is as follows:
- a.: Covering or Opaque ■
- b.: Semi-covering and semi-transparent 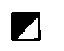
- c.: Transparent □

At present painters who use these covering, semi-covering and transparent paints together are not generally able to exploit the paints' potential to the full.

Studies carried out by the inventor in this patent enable the features of opaqueness and the transparency of paint to be controlled with mathematical precision and the material-colour potential to, on the whole, be exploited to its full extent.

The purpose of this discovery is to provide all painters, of any level, with different sets of paints whose degree of opaqueness is identified as described above.

Another objective is to provide paints that can be reproduced easily and accurately in the same shade after a period of time.

A further objective is to provide restorers with paints that reproduce existing shades.

This description is relative to oil paints, but the new chromatic composition, with controlled opaqueness, is also suitable for water colours, acrylic paints and other painting mediums.

With oil as well as acrylic paints, water colours and other painting mediums, the grinding of the pigments will have to be fine, since extra-fine grinding of pigments produces a surplus of colouring power that affects the result.

Following the method of classification formulated by the inventor, paints or colouring pigments are divided into three bands of opaqueness:
- I.: Covering or Opaque
- II.: Semi-covering or Semi-opaque
- III.: Semi-transparent and transparent.

This sub-division fully reflects the objective and noticeably different states of opaqueness of paints and colouring pigments.

To achieve both the direct and complementary objectives, a new line of paints has been studied: CAT. O, CAT. 1, CAT. 2, CAT. 3, obtained from the amalgam of precise percentages of pigments in bands I, II or III.

The percentage of pigments in CAT. 1 are as follows:
about 40% of pigment(s) from band I and about 60% of other pigment(s), similar in shade but from range II; white is also formed: about 40% of covering white from band I and about 60% of semi-covering white from band II.

To obtain saturation of shades a white from band I must be used, that is formed completely by covering pigment(s).

The percentage of pigments in CAT. 2 are as follows:
about 28% of pigment(s) from band II and around 72% of other pigment(s) similar in shade but from band III, combined with a white from CAT. O, including pigment(s) only from band I.

With paints from CAT. 2 it has been observed that to effectively obtain the whole spectrum of colours existing in nature it is sufficient to have the three primary colours from CAT. 2, a covering white from band I and correction with a yellowy light brown.

Below, as an example, are the precise compositions of pigments and their correction in CAT. 2:
- Yellow: about 28% of Primary Yellow from band II (PY3) + about 72% of Primary Yellow from band III (PY97)
- Red: about 28% of Primary Red from band II (PR149) + about 72% of Primary Red from band III (PR122)
- Blue: about 28% of Ultramarine Blue from band II (PB29) + about 72% of Cyan Primary Blue from band III (PB15:3)
- Correction: about 28% of Ochre Yellow from band II (PY43), + about 72% of Natural Sienna from band III (PBr7).
- White from band I (PW6).

All the paints used in the examples can obviously be replaced by others with the same characteristics, in particular in a similar shade and the same band of opaqueness.

Both in category 1 (CAT. 1) and in category 2 (CAT. 2), that is in the paints formed by two parts in pigment(s) similar in shade but in a different band of opaqueness, the ideal situation is for the more opaque pigment to be as similar as possible to the shade or a little lighter than the less opaque part of which it is formed.

In category 3 (CAT.3), as in category 2 (CAT. 2), to obtain any shade it is sufficient to have the three primary colours from band III, semi-transparent and transparent, white from CAT. 2 made up of about 28% of Zinc white (PW4) from band II + about 72% of Calcium white (PW18) from band III, and a suitable correction, which in this case is a reddish-dark brown or Burnt Sienna from band III.

Six colours are needed to obtain all the shades in Category 1: the primary and secondary colours as well as white and a brown correction.

In Category O, to obtain all 12 shades, that is the whole chromatic circle, the intermediate colours, white and a brown correction, as well as the primary and secondary colours, are needed.

The attached table shows a diagram that helps to understand the four categories described above.

These four conditions or categories represent that number of series of colours which can have all shades in four different grades of opaqueness.

This triangle shows opaqueness gradually being reduced from bottom to top. The letter O indicates the line of the colour's maximum opaqueness and corresponds to the opaqueness of the covering colours or those from band I.

The percentages given in this report are intended as the volume of pigment(s) prepared in the binding medium and specifically:
- about 28% intended as a 20-35% range
- about 72% intended as a 65-80% range
- about 40% intended as a 30-50% range
- about 60% intended as a 50-70% range.

Therefore, with reference to the preceding description, the following claims are made.

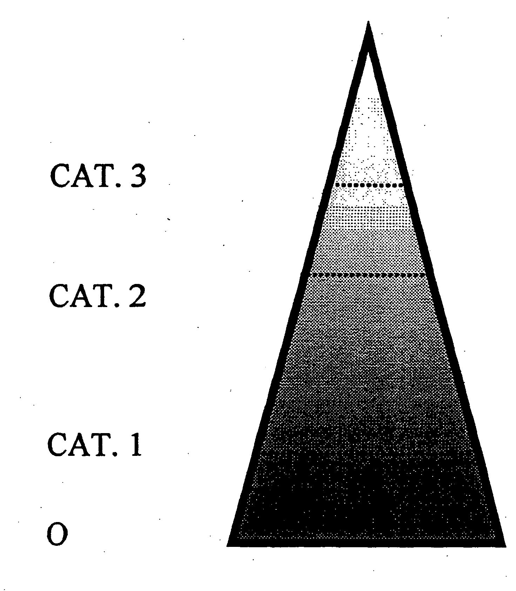

## Claims

1. Oil paint or another binding medium, able to be used for combinations of shade, **characterised by** having the following percentages of pigment in relation to opaqueness/transparency: about 40% of covering or opaque pigment(s) from band I, and about 60% of other pigment(s), similar in shade but semi-covering or semi-opaque, from band II.

2. Paint, as in 1, **characterised by** the fact that the covering or opaque pigment(s) from band I, has a slightly lighter tonality than the equivalent semi-covering or semi-opaque pigment(s) in band II.

3. Paint, as in 1 and 2, **characterised by** the fact that the white used is the covering or opaque type from band I.

4. Oil paint or another binding medium, able to be used for combinations of shade, **characterised by** having the following percentages of pigment in relation to opaqueness/transparency: about 28% of semi-covering or semi-opaque pigment(s) from band II, and about 72% of other pigment(s) similar in shade but semi-transparent or transparent from band III.

5. Paint, as in 4, **characterised by** the fact that the semi-covering or semi-opaque pigment(s) from band II, is a slightly lighter tonality than the equivalent semi-transparent or transparent pigment(s) from band III.

6. Paint, as in 4 and 5, **characterised by** the fact that the white used is of the covering or opaque type from band I.

7. Oil paint or another binding medium, able to be used for combinations of shade, with semi-transparent or transparent pigments, **characterised by** the fact that the white used has about 28% of semi-covering or semi-opaque pigment from band II and about 72% of semi-transparent and transparent from band III.

8. Oil paint or another binding medium, able to be used for combinations of shade, **characterised by** the fact that it is made up only of covering pigment(s), with a total of 12 shades as far as possible reflecting the 12 of the chromatic circle, plus white and brown from category O.
